# EUROPÄISCHE PATENTSCHRIFT

(11) **EP 0 397 596 B1**
(45) Veröffentlichungstag und Bekanntmachung des Hinweises auf die Patenterteilung: **27.01.1993**
(21) Anmeldenummer: 90810317.9
(22) Anmeldetag: 20.04.1990
(51) Int. Cl.: G01F 1/66

(54) **Ultraschall-Durchflussmessgerät**
Ultrasonic flowmeter
Débitmètre supersonique

(30) Priorität: 09.05.1989 EP 89810343
(43) Veröffentlichungstag der Anmeldung: 14.11.1990
(73) Patentinhaber: Endress + Hauser Flowtec AG, CH-4153 Reinach BL 1 (CH)
(72) Erfinder: Steinacher, Michael, CH-4054 Basel (CH)
(74) Vertreter: Morstadt, Volker, Dipl.-Ing.

(56) Entgegenhaltungen:
- EP-A- 0 200 896
- US-A- 3 751 979
- US-A- 4 164 865
- THE REVIEW OF SCIENTIFIC INSTRUMENTS, Band 25, Nr. 3, März 1954, Seiten 201 - 206; H.P. KALMUS: "Electronic flowmeter system"

## Beschreibung

Die Erfindung betrifft Ultraschall-Durchflussmessgeräte, wie sie beispielsweise in der US-A 37 51 979 beschrieben sind. Nach deren Fig. 3 und 10 ist entlang einer Fluidmessstrecke, z.B. eines Rohres, ein Paar von gegenüberliegenden Ultraschallwandlern, im folgenden kurz US-Wandler genannt, angeordnet, deren Verbindungslinie mit der Längsachse der Fluidmessstrecke einem von 90 Grad abweichenden Winkel bildet.

Zur Erzielung eines von der Schallgeschwindigkeit im Fluid unabhängigen Messergebnisses werden die US-Wandler abwechselnd von Senden auf Empfangen umgeschaltet, so dass die Schallwellen sich im Fluid das eine Mal mit einer Komponenten in seiner Strömungsrichtung und das andere Mal mit einer Komponenten entgegen seiner Strömungsrichtung ausbreiten.

Nach Fig. 6 der genannten US-A 37 51 979 werden die US-Wandler des Paares mittels einer elektronischen Schaltung, die Torschaltungen enthält, umgeschaltet. Anstatt dieser speziellen elektronischen Schaltung können zur Umschaltung auch inzwischen handelsübliche integrierte Halbleiter-Analogumschaltanordnungen verwendet werden, wie z.B. die verschiedenen von der Fa. Siliconix angebotenen CMOS Analog Switches, die pro Chip mehrere Schaltstrecken aufweisen.

Die sinusförmige Erregung des als Ultraschallsender dienenden US-Wandlers erfolgt mittels einer Oszillatorschaltung üblicherweise bei einer Frequenz von einigen 10 kHz. Die Umschaltung erfolgt so, dass pro US-Wandler zwei Schaltstrecken vorgesehen sind, von denen jeweils gleichzeitig die eine leitend und die andere nichtleitend gesteuert wird oder umgekehrt. Dabei liegt das jeweilige Ende der beiden Schaltstrecken am zugeordneten US-Wandler und das andere Ende der dem einen US-Wandler zugeordneten leitenden Schaltstrecke am anderen Ende der dem anderen US-Wandler zugeordneten nichtleitenden Schaltstrecke sowie am Eingang einer Messschaltung, während das andere Ende der dem einen US-Wandler zugeordneten nichtleitenden Schaltstrecke mit dem anderen Ende der dem anderen US-Wandler zugeordneten leitenden Schaltstrecke und mit dem Ausgang der erwähnten Oszillatorschaltung verbunden ist.

Es hat sich nun gezeigt, dass bei der Verwendung der genannten handelsüblichen integrierten Analogumschaltanordnungen ein Uebersprechen auftritt, das von den nichtleitenden Schaltstrecken ausgeht, da sie u.a. eine Längskapazität aufweisen bzw. bilden, also eine Kapazität, die zwischen dem Analogsignal-Eingang und dem Analogsignal-Ausgang liegt.

Die Aufgabe der in den Patentansprüchen definierten Erfindung besteht darin, dieses Uebersprechen durch schaltungstechnische Massnahmen so zu reduzieren, dass das trotzdem noch verbleibende Uebersprech-Störsignal akzeptiert werden kann, mit andern Worten soll die an sich vorhandene Uebersprechdämpfung der üblichen Halbleiter-Analogschalter, die bei z.B. 50 kHz und einem Abschlusswiderstand von 600 Ohm ca. 65 dB beträgt, um mindestens stens das Zehnfache erhöht werden.

Dies wird bei der Erfindung gemäß dem Anspruch 1 zum einen dadurch erreicht, dass ein Analogumschaltanordnungs-Typ ausgewählt wird, der zwei nichtleitende Zusatzschaltstrecken aufweist, die auf demselben Halbleiterchip und in derselben Halbleitertechnologie wie die Schaltstrecken realisiert sein müssen, die also ebenso wie die Schaltstrecken z.B. CMOS-Schalter sind. Die beiden Zusatzschaltstrecken sind nach der Erfindung ferner einander parallelgeschaltet und dauernd nichtleitend gesteuert. Wenn also z.B. ein Analogumschaltanordnungs-Typ verwendet wird, bei dem Schaltstrecken bereits ohne Steuersignal nichtleitend sind, kann ihr Steuereingang unbeschaltet bleiben. Schliesslich liegt diese Parallelschaltung der beiden Zusatzschaltstrecken in Serie mit einem invertierenden Einheitsverstärker, also einem um 180 Grad phasendrehenden Analogverstärker, der die Verstärkung eins hat, und diese Serienschaltung liegt zwischen dem Oszillatorausgang und dem Messschaltungseingang oder zwischen den beiden US-Wandlern.

Ein realisiertes Durchflussmessgerät unter Verwendung des Analogschaltertyps DG 307 A von Siliconix hatte bei gleichen Messbedingungen wie oben, also 50 kHz und 600 Ohm, bereits eine Uebersprechdämpfung von etwa 100 dB, was die gestellten Erwartungen weit übertraf.

Die Erfindung wird nun anhand der Figuren der Zeichnung weiter erläutert.
Fig. 1 zeigt als Ausführungsbeispiel schematisch den mechanischen Teil eines Ultraschalldurchflussmessgerätes, also dessen Ultraschall-Fluidmessstrecke, und
Fig. 2 zeigt schematisch das Schaltbild des elektronischen Teils des Ultraschalldurchflussmessgeräts.

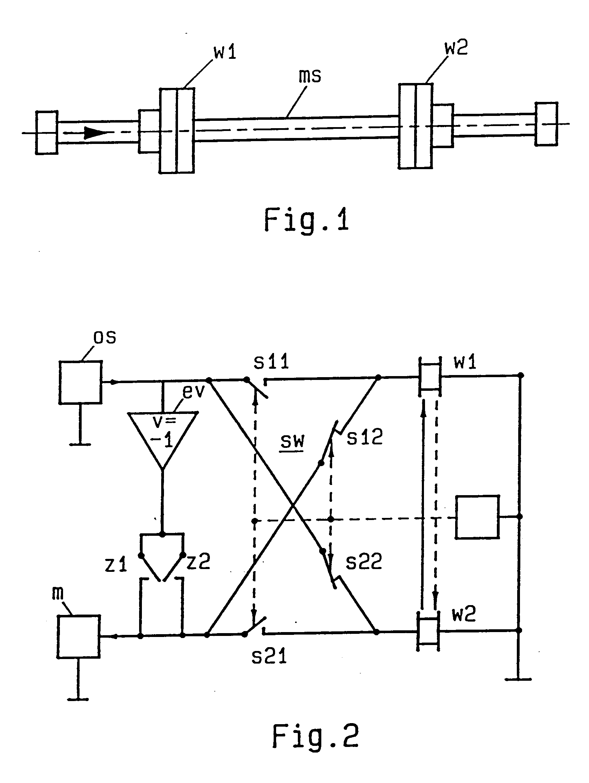

Beim Ausführungsbeispiel der Fig. 1 sind die beiden US-Wandler w1, w2 um die Fluidmessstrecke ms gelegt, die von einem Rohr aus geeignetem Material besteht, in dem das zu messende Fluid strömt. Der Winkel zwischen der Verbindungslinie der beiden US-Wandler w1 und w2 und der Strömungsrichtung beträgt daher 0 Grad.

Die Erfindung ist jedoch nicht auf diese bevorzugte Anordnung der US-Wandler beschränkt, sondern es sind die aus dem genannten Stand der Technik geläufigen Anordnungen, bei denen die US-Wandler am Rand der Fluidmessstrecke einander schräg gegenüberliegend angebracht sind, ebenfalls möglich. Beim in Fig. 2 schematisch gezeigten elektronischen Teil der Erfindung besteht die integrierte Analogumschaltanordnung sw aus den beiden dem einen US-Wandler w1 zugeordneten Schaltstrecken s11, s12, von denen die eine nichtleitend ist, wenn die andere leitend ist. In Fig. 2 ist die zeichnerische Darstellung so gewählt, dass für die nichtleitenden Schaltstrecken ein mechanischer Arbeitskontakt, dagegen für die leitenden Schaltstrecken ein mechanischer Ruhekontakt gezeigt ist.

Die beiden Funktionen "leitend", "nichtleitend" sind zum einen paarweise gleichzeitig zu realisieren und zum anderen durch ein Steuersignal zu vertauschen. Dies kann z.B. mit einem einzigen Steuersignal, dessen einer Pegel bei OV (= L-Pegel) liegt, und dessen anderer Pegel positiv ist und einige Volt (= H-Pegel) beträgt, zum einen dadurch erreicht werden, dass als nichtleitende Schaltstrecke ein N-Kanal-Enhancement-Feldeffekttransistor, der dann beim angelegten H-Pegel leitend wird, und als leitende Schaltstrecke ein N-Kanal-Depletion-Feldeffekttransistor benutzt wird, der dann beim angelegten H-Pegel gesperrt, also nichtleitend, wird, zum andern aber auch dadurch, dass als nichtleitende Schaltstrecke ein P-Kanal-Depletion-Feldeffekttransistor, der dann beim angelegten H-Pegel leitend wird, und als leitende Schaltstrecke ein P-Kanal-Enhancement-Feldeffekttransistor benutzt wird, der dann bei angelegtem H-Pegel nichtleitend wird.

Wenn andererseits für die Schaltstrecken nur Isolierschicht-Feldeffekttransistoren desselben Leitungstyps (N-Kanal oder P-Kanal) und derselben Leitungsart (Enhancement oder Depletion) verwendet werden sollen, ist das Steuersignal dem die nichtleitende Schaltstrecke realisierenden Transistor direkt, dem die gleichzeitig leitende Schaltstrecke realisierenden Transistor dagegen über einen Inverter zuzuführen. Das eben Erläuterte gilt an sich auch für die Verwendung von CMOS-Transmission-Gates als Schaltstrecken.

In Fig. 2 sind dem US-Wandler w1 die nichtleitende Schaltstrecke s11 und die leitende Schaltstrecke s12 derart zugeordnet, dass jeweils der eine ihrer Anschlüsse mit dem einen Anschluss des US-Wandlers w1 verbunden ist, dessen anderer am Schaltungsnullpunkt liegt. In vergleichbarer Weise gehören zum anderen US-Wandler w2 die nichtleitende Schaltstrecke s21 und die leitende Schaltstrecke s22, deren jeweiliges eines Ende am einen Anschluss des US-Wandlers w2 liegt, dessen anderer mit dem Schaltungsnullpunkt verbunden ist.

Die anderen Enden der Schaltstrecken s11, s22 liegen am Ausgang der Oszillatorschaltung os, die das die Ultraschallschwingung erzeugende Wechselspannungssignal erzeugt. Dagegen liegen die anderen Enden der Schaltstrecken s12,s21 am Eingang der Messschaltung m, die in üblicher Weise aus den in Strömungsrichtung und in Gegenströmungsrichtung gemessenen Laufzeiten ein die Strömungsgeschwindigkeit des Fluids repräsentierendes Signal erzeugt.

Zur Lösung des eingangs geschilderten Problems des Uebersprechens ist nun entsprechend Fig. 2 vorgesehen, dass die beiden dauernd nichtleitenden Zusatzschaltstrecken z1, z2 einander parallelgeschaltet sind, dass mit dieser Parallelschaltung der invertierende Einheitsverstärker ew derart in Serie liegt, dass ihr das Oszillatorsignal um 180 Grad gedreht zugeführt wird, und dass diese Serienschaltung zwischen dem Ausgang der Oszillatorschaltung os und dem Eingang der Messschaltung m liegt. Der invertierende Einheitsverstärker hat die Verstärkung v = -1. Zur Realisierung dient ein entsprechend beschalteter Operationsverstärker.

Die Zusatzschaltstrecken z1, z2 sind in derselben Halbleitertechnologie und auf demselben Halbleiterchip wie die Schaltstrecken s... zu realisieren, damit sie mit diesen weitestgehend identische elektrische Eigenschaften haben.

## Patentansprüche

1. Ultraschall-Durchflussmessgerät mit mindestens einem Paar von entlang einer Fluidmessstrecke (ms) einander gegenüberliegenden Ultraschallwandlern (= US-Wandler) (w1, w2),
- deren Verbindungslinie mit der Längsachse der Fluidmessstrecke (ms) einen von 90 Grad abweichenden Winkel bildet und
- die mittels einer integrierten Halbleiter-Analogumschaltanordnung (sw) auf Senden bzw. Empfangen einstellbar sind,
- - die pro US-Wandler (w1, w2) zwei Schaltstrecken (s11, s12; s21, s22)
- -- vondenen jeweils gleichzeitig die eine(s12, s22) leitend und die andere (s11, s21) nichtleitend ist oder umgekehrt,
- -- von denen jeweils das eine Ende gemeinsam am zugehörigen US-Wandler (w1, w2),
- -- von denen das andere Ende der dem einen US-Wandler (W1) zugeordneten leitenden Schaltstrecke (s12) mit dem anderen Ende der dem anderen US-Wandler (w2) zugeordneten nichtleitenden Schaltstrecke (s21) sowie mit dem Eingang einer Messschaltung (m) und
- -- von denen das andere Ende der dem einen US-Wandler (w1) zugeordneten nichtleitenden Schaltstrecke (s11) mit dem anderen Ende der dem anderen US-Wandler (w2) zugeordneten leitenden Schaltstrecke (s22) sowie mit dem Eingang einer Oszillatorschaltung (os) verbunden ist, und
- - zwei dauernd nichtleitende, auf demselben Halbleiterchip und in derselben Halbleitertechnologie wie die Schaltstrecken (s...) realisierte und einander parallelgeschaltete Zusatzschaltstrecken (z1, z2) aufweist,
- -- welche Parallelschaltung, mit einem invertierenden Einheitsverstärker (ev) in Serie geschaltet, zwischen dem Oszillatorausgang und dem Messschaltungseingang oder zwischen dem jeweiligen Eingang der beiden US-Wandler (w1, w2) liegt.

2. Messgerät nach Anspruch 1 mit CMOS-Schaltstrecken.

3. Messgerät nach Anspruch 1 oder 2 mit um die Fluidmessstrecke gelegten, ringförmigen US-Wandlern (w1, w2).

## Claims

1. Ultrasonic flowmeter comprising at least one pair of ulstrasonic transducers (= US transducers) (w1, w2) mounted along a fluid-measuring section (ms) opposite each other,
- whose connecting line makes an angle different from 90 degrees with the longitudinal axis of the fluid-measuring section (ms), and
- which are switchable to transmit or receive mode by means of a semiconductor integrated analog switching arrangement (sw) comprising
- - two switching paths (s11, s12; s21, s22) per US transducer (w1, w2)
- -- one (s12, s22) of which is conducting and the other (s11, s21) of which is simultaneously nonconducting, or vice versa,
- -- one end of each of which is connected to the associated US transducer (w1, w2),
- -- of which the conducting switching path (s12) associated with one (w1) of the US transducers has its other end connected to the other end of the nonconducting switching path (s21) associated with the other US transducer (w2) and to the input of a measuring circuit (m), and
- -- of which the nonconducting switching path (s11) associated with said one (w1) of the US transducers has its other end connected to the other end of the conducting switching path (s22) associated with the other US transducer (w2) and to the input of an oscillator circuit (os), and
- - two constantly nonconducting additional switching paths (z1, z2) implemented on the same semiconductor chip and in the same semiconductor technology as said switching paths (s...) and connected in parallel,
- -- which parallel combination, connected in series with an inverting unity-gain amplifier (ev), is inserted between the oscillator output and the input of the measuring circuit or between the inputs of the two US transducers (w1, w2).

2. A flowmeter as claimed in claim 1 wherein the switching paths are CMOS switching paths.

3. A flowmeter as claimed in claim 1 or 2 wherein the US transducers (w1, w2) are annular transducers laid around the fluid-measuring section.

## Revendications

1. Débitmètre à ultrasons, comportant le long d'un tronçon de mesure d'un fluide (ms), au moins une paire de transducteurs à ultrasons (= transducteur US) (w1, w2) disposés de manière à être opposés l'un à l'autre,
- dont la ligne de liaison forme avec l'axe longitudinal du tronçon de mesure du fluide (ms), un angle différent de 90°, et
- qui peuvent être réglés respectivement sur le mode émission ou sur le mode réception au moyen d'un ensemble de commutation analogique intégré à semi-conducteur (sw),
- - qui comporte par transducteur US (w1, w2), deux voies de commutation (s11, s12; s21, s22),
- -- dont l'une (s12, s22) de chaque paire de voies est passante et l'autre (s11, s21) est simultanément non passante, ou inversement,
- -- dont l'une des extrémités de chaque voie est reliée en commun au transducteur US correspondant (w1, w2),
- -- dont l'autre extrémité de la voie de commutation passante (s12) affectée au transducteur US (w1), est reliée à l'autre extrémité de la voie de commutation non passante (s21) affectée à l'autre transducteur US (w2), ainsi qu'à l'entrée d'un circuit de mesure (m), et
- -- dont l'autre extrémité de la voie de commutation non passante (s11) affectée au transducteur US (w1), est reliée à l'autre extrémité de la voie de commutation passante (s22) affectée à l'autre transducteur US (w2), ainsi qu'à la sortie d'un circuit oscillateur (os),
- - et qui comporte deux voies de commutation supplémentaires (z1, z2) en parallèle l'une avec l'autre, constamment non passantes, et réalisées sur la même puce à semi-conducteur et selon la même technologie de semi-conducteur que les voies de commutation (s...),
- --ce circuit parallèle, couplé en série avec un amplificateur inverseur à gain unitaire (ev), étant disposé entre la sortie de l'oscillateur et l'entrée du circuit de mesure, ou entre les entrées respectives des deux transducteurs US (w1, w2).

2. Appareil de mesure selon la revendication 1, comportant des voies de commutation CMOS.

3. Appareil de mesure selon la revendication 1 ou 2, comportant des transducteurs US (w1, w2) de forme annulaire, disposés autour du tronçon de mesure du fluide.
